# EUROPEAN PATENT SPECIFICATION

(11) **EP 2 617 238 B1**
(45) Date of publication and mention of the grant of the patent: **21.01.2015**
(21) Application number: 10859167.8
(22) Date of filing: 05.11.2010
(51) Int. Cl.: H04W 76/02, H04W 8/08, H04W 40/34

(54) **Method for providing local traffic shortcut in packet-oriented mobile communication network**
Verfahren zur Bereitstellung einer lokalen Verkehrsabkürzung in einem paketorientierten mobilen Kommunikationsnetz
Procédé de fourniture d'un raccourci de trafic local dans un réseau de communication mobile à commutation de paquets

(43) Date of publication of application: 24.07.2013
(73) Proprietor: Huawei Technologies Co., Ltd., Shenzhen, Guangdong 518129 (CN)
(72) Inventor: SCHRAMM, Mirko, 14195 Berlin (DE); SCHRAMM, Frank, 13187 Berlin (DE); ZHOU, Qing, 10587 Berlin (DE)
(74) Representative: Pfenning, Meinig & Partner GbR
(86) International application number: PCT/CN2010/078454
(87) International publication number: WO 2012/058819

(56) References cited:
- WO-A1-2010/039085
- WO-A2-2009/017738
- CN-A- 1 822 573
- CN-A- 1 830 182
- CN-A- 101 453 744
- CN-A- 101 552 716
- US-A1- 2004 228 343
- US-A1- 2008 159 241
- US-A1- 2010 020 812
- US-A1- 2010 202 455

## Description

### TECHNICAL BACKGROUND

The invention relates to a method for providing a local traffic shortcut in a packet-oriented mobile communication network and in particular in a 3GPP network.

Mobile communication networks are applying a specific mechanism to provide mobility for end devices such as user equipment. This mechanism ensures that IP packets can be transferred between the respective end device and an edge gateway in the mobile communication network where an IP address of the end device is maintained. Accordingly, a mobility mechanism is tunneling the IP packets through the infrastructure of the mobile communication network along a path consisting of a radio access node and one or more gateways.

It is a characteristics of mobile communication networks that a certain amount of data traffic is exchanged between end devices that are locally close to each other, for example persons in the same street, town or city area. In contrast, the location of the edge gateway of the mobile communication network is, however, typically in a certain distance from the radio access node. Depending on the expected overall amount of data traffic an edge gateway can be responsible for a large area (like a whole city) but also for a whole country. Consequently, in conventional mobile communication networks data traffic exchanged between two end devices may run through a very large area (such as a whole country) even if the two end devices are connected to the very same radio access node.
US2010020812A1 relates to a route control method in a packet exchange type mobile communication system, and in particular to a method of redirecting user traffic within an access gateway if users accommodated in a same access gateway or neighboring access gateways communicate with each other.
US2008159241A1 is related to route optimization in an IP telecommunication network that supports wireless mobile, stations.
US2004228343A1 is related to route optimization between mobile routers of a mobile network, the network comprising a home agent, a mobile network host, a correspondent node and a route server resource for providing identification of relevant addressing information.
US2010202455A1 relates to a method of route optimization involving a first mobile device associated with a first home gateway.
US2010020812A1, US2008159241A1, US2004228343A1 and U52010202455A1 do not disclose: setting up a service specific tunnel between a first leaf network node and a second leaf network node via a root network node; all network nodes along a signal path of the service specific tunnel storing their respective node IDs in an LTS-database; and starting from a network node in the signal path that is closest to a terminal or user equipment UE, querying, by said network nodes in the signal path, said LTS-database.
WO2010039085A1 relates to methods and devices that allow for efficient transportation of traffic in conjunction with a home base station. The home base station may establish local breakout communication between two user equipments connected to the home base station, addresses of the respective user equipments being accessible from the home base station.
WO2010039085A1 does not disclose: setting up a service specific tunnel between a first leaf network node and a second leaf network node via a root network node; and all network nodes along a signal path of the service specific tunnel storing their respective node IDs in an LTS-database.

Consequently, data traffic is unnecessarily transferred throughout the conventional mobile communication network thus wasting resources, processing capacity and energy. Accordingly, it is a goal of the present invention to provide a method which uses efficiently a transport capacity provided by a mobile communication network.

### SUMMARY

According to a first aspect the invention provides a method for providing a local traffic shortcut (LTS) in a packet-oriented mobile communication network formed by a hierarchical network having different hierarchy levels, the hierarchical network comprising a tree structure having leaf network nodes connected via intermediary network nodes to at least one root network node, the method comprising the steps of:

for a service instance of a service between a first leaf network node and a second leaf network node of the packet-oriented mobile communication network setting up a service specific tunnel between the first leaf network node and the second leaf network node via said root network node;
storing traffic instance identification data of said service instance in an LTS-database and all network nodes along a signal path of the service specific tunnel storing their respective node IDs in said LTS-database;

starting from a network node in the signal path that is closest to a user equipment (UE) or terminal, querying, by said network nodes in the signal path, said LTS-database of said network for entries comprising the same traffic instance identification data to identify at least one network node for performing a local traffic shortcut (LTS);

establishing an LTS-tunnel with the identified network node, wherein the LTS-tunnel is established at the lowest possible hierarchy level of the network; and

using the established LTS-tunnel with the identified network node for data traffic corresponding to said traffic instance identification data.

The method according to the present invention provides the additional advantage that a transmission delay which is caused by transferring IP data packets along the conventional longer data path can be reduced significantly if local traffic shortcut (LTS) is in use as both the actual transfer time of the IP packets as well as a processing time inside the respective network nodes such as gateways and IP routers is no longer needed. Consequently, this reduced transmission delay can by either of benefit for the radio access node by allowing a higher flexibility for an air interface scheduling or the terminals of end users by improving the quality of the respective service.

According to a possible implementation of the first aspect of the present invention the identified network node which is identified in response to a query of the network node is formed by another network node of the packet-oriented mobile communication network. In a possible implementation of the first aspect of the present invention the querying network node checks whether a direct connection between the querying network node and the identified network node is available.

In a possible implementation of the first aspect of the present invention if the querying network node determines that a direct connection between the querying network node and the identified network node is available a LTS-tunnel with the other network node is established via the direct connection.

In a possible implementation of the first aspect of the present invention the LTS-tunnel with the other network node via the direct connection is only established if the other network node accepts the establishment of such an LTS-tunnel.

In a further possible implementation of the first aspect of the present invention if the identified network node is identical with the querying network node itself the querying network node establishes an LTS-tunnel within the querying network node.

In a possible implementation of the first aspect of the present invention the packet-oriented mobile communication network is formed by a hierarchical network.

The hierarchical network has different hierarchy levels. In a possible implementation of the first aspect of the present invention the LTS-tunnel is established between network nodes of the same hierarchy level.

In a possible implementation of the first aspect of the present invention the hierarchical packet-oriented mobile communication network can comprise a tree structure having leaf network nodes connected via intermediary network nodes to at least one root network node.

In a possible implementation of the first aspect of the present invention two network nodes in the hierarchical packet-oriented mobile communication network can be connected through a service independent tunnel connection provided with the root network node for communication.

In a possible implementation of the first aspect of the present invention a service specific tunnel between the network nodes is set up for a service instance of a service between network nodes of that packet-oriented mobile communication network and traffic instance identification data of said service instance and the node IDs of the network nodes comprising the service specific tunnel are stored in the LTS-database.

In a possible implementation of the first aspect of the present invention the service instance comprises a service-ID the respective service.

In a first implementation of the method according to a first aspect of the present invention a LTS-permission indicating whether an establishment of a LTS-tunnel is admissible for the respective service instance is provided.

In a possible implementation of the method according to the first aspect of the present invention the traffic instance identification data (TIID) and node IDs are stored only if the LTS permission is provided.

In a further possible implementation of the method according to the first aspect of the present invention if a direct connection between a network node and another network node is available an LTS-tunnel is established at the lowest possible hierarchy level of the network.

In a possible implementation of the method according to the first aspect of the present invention it is decided whether a direct connection between the network node and another network node is possible by checking configuration data of said network node.

In a further possible implementation of the method according to the first aspect of the present invention the LTS-database can be formed by a central database collocated with a central control unit of the network.

In a possible implementation of the first aspect of the present invention the central control unit is configured with network topology information.

This network topology information can comprise information about network node pairs for which a LTS-tunnel via a direct connection can be established.

In a still further implementation of the method according to a first aspect of the present invention each network node can comprise a LTS -database for checking whether establishment of a node-internal LTS-tunnel is possible.

According to a second aspect of the present invention a packet-oriented mobile communication network is provided comprising:

a root network node connected in a hierarchical tree structure via intermediary network nodes to leaf network nodes; and

a LTS-database for storing traffic instance identification data for each service instance of a service, wherein said traffic instance identification data comprises a service-ID of said service and node IDs of network nodes along a signal path of a service specific tunnel between a first leaf network node via said root network node to a second leaf network node; wherein the network nodes of the packet-oriented mobile communication network are configured to carry out the steps according to claim 1.

In a possible implementation of the packet-oriented mobile communication network according to the second aspect of the present invention the leaf network nodes are radio access nodes each providing wireless links to mobile terminals.

According to a possible implementation of the packet-oriented mobile communication network according to the second aspect of the present invention the root network node and the intermediary network nodes are formed by gateway nodes.

In a possible implementation of the packet -oriented mobile communication network according to the second aspect of the present invention the packet-oriented mobile communication network comprises a 3 GPP network.

In a further implementation of the packet-oriented mobile communication network according to a second aspect of the present invention the packet-oriented mobile communication network comprises a WIMAX network.

### BRIEF DESCRIPTION OF FIGURES

In the following possible implementations of different aspects of the present invention are described with reference to the enclosed figures.
Fig. 1 shows a flowchart of exemplary implementations of a method for providing a local traffic shortcut in a packet-oriented mobile communication network according to a first aspect of the present invention;
Fig. 2 shows a block diagram of a basic reference network architecture of a packet-oriented mobile communication network in which a method for providing a local traffic shortcut according to the first aspect of the present invention can be performed;
Fig. 3 shows a signal diagram of an exemplary procedure of a method for providing a local traffic shortcut in a packet-oriented mobile communication network according to the first aspect of the present invention;
Fig. 4 shows a schematic diagram for illustrating the provision of a local traffic shortcut in a packet-oriented mobile communication network within the same traffic shortcut point;
Fig. 5 shows a further schematic diagram for illustrating the provision of a local traffic shortcut between different traffic shortcut points in a packet-oriented mobile communication network;
Fig. 6 shows a diagram for illustrating a high-level architecture of a 3GPP/LTE network in which a method for providing a local traffic shortcut can be employed;

### DETAILED DESCRIPTION OF EMBODIMENTS

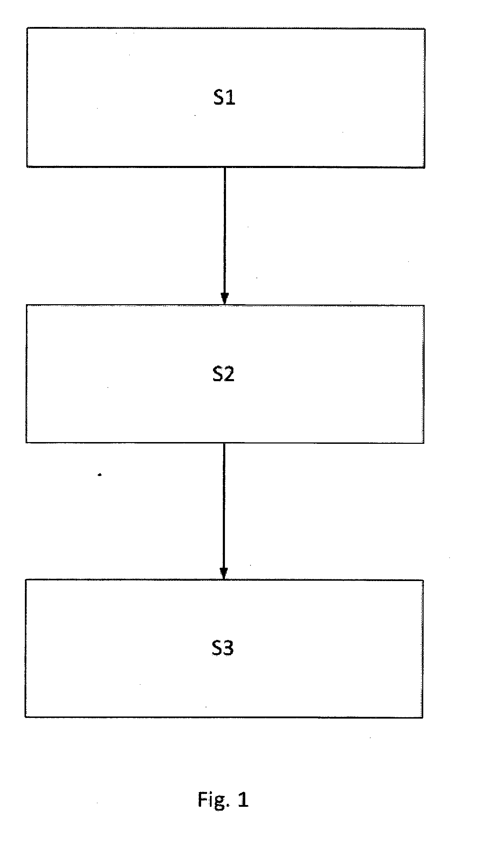

As can be seen from fig. 1 showing a possible implementation of a method for providing a local traffic shortcut LTS in a packet-oriented mobile communication network according to a first aspect of the present invention the method for providing a local traffic shortcut LTS can comprise several steps.

In a first step S1 a network node of a packet-oriented mobile communication network is provided with traffic instance identification data TIID. The respective network node can store the traffic instance identification data TIID along with a node-ID of the network node as an entry in a LTS-database.

In a further step S2 the network node queries the LTS-database of the network for entries comprising the same traffic instance identification data TIID to identify at least one network node for performing a local traffic shortcut LTS.

In a further step S3 an LTS-tunnel with the identified network node is established, if possible.

In a step S4 the established LTS tunnel with the identified network node is used for data traffic corresponding to the traffic instance identification data TIID.

The method for providing a local traffic shortcut LTS in a mobile communication network as shown in the exemplary flowchart shown in fig. 1 can be employed in any packet-oriented mobile communication network, and in particular in a 3GPP network. The packet-oriented mobile communication network can be a hierarchical network having different hierarchy levels wherein the LTS-tunnel established in step S3 is established between network nodes of the same hierarchy level. The hierarchical packet-oriented mobile communication network can comprise a tree structure having leaf network nodes connected via intermediary network nodes to at least one root network node. These leaf network nodes can be formed by radio access nodes each providing a wireless link to one or several mobile terminals. The root network nodes of the hierarchical packet-oriented mobile communication network and the intermediary network nodes can comprise gateway nodes such as a serving gateway node SGWof a 3GPP network.

In a possible implementation of the first aspect of the present invention two network nodes are connected through a service independent tunnel connection with the root network node for communication. For a service instance of a service between two network nodes of the packet-oriented mobile communication network a service specific tunnel between both network nodes via the root network node is set up and traffic instance identification data TIID of the respective service instance is stored in the LTS-database of the network. The traffic instance identification data TIID of the service instance can comprise in a possible implementation of the first aspect of the present invention a service-ID of the respective service.

In a still further implementation of the first aspect of the present invention a LTS-permission indicating whether an establishment of a LTS-tunnel is admissible for the respective service instance is also stored in the LTS-database of the network.

A network node can query the LTS-database of the network for entries comprising the same traffic instance identification data in step S2 to identify at least one network node for performing a local traffic shortcut LTS. If a direct connection between the querying network node and another network node of the network is available the LTS-tunnel can be established in step S3 in a possible implementation at the lowest possible hierarchy level of the network, i.e. the hierarchy level closest to the mobile terminals served by the radio access nodes forming the leaf nodes of the hierarchical network. A decision whether a direct connection is available can be taken in a possible implementation by checking configuration data of the network node.

In a possible implementation of the method for providing a local traffic shortcut LTS in a packet-oriented mobile communication network according to the first aspect of the present invention the LTS-database can be formed by a central database of the network. This central database can be collocated with a central control unit of the network.

In an alternative implementation of the first aspect of the present invention the LTS-database can be formed by a decentralized database distributed between different network nodes. In a possible implementation the central control unit can be configured with network topology information data of the network. In a possible embodiment the central control unit can also be configured with information about network pairs for which a LTS-tunnel via a direct connection can be established. In a possible implementation of the method according to the first aspect of the present invention each network node of the network can comprise a LTS-database for checking whether an establishment of a node internal LTS-tunnel is possible.

A querying network node searching within the LTS-database for entries to identify at least one network node for performing a local traffic shortcut. This identified network node is in a possible embodiment another network node of the network. Alternatively, it is possible that the querying network can determine that the identified network node is the querying network node itself.

If the identified network node is formed by another network node of the network the querying network node checks whether a direct connection between the querying network node and the identified other network is available and establishes a LTS-tunnel with the other network node via the direct connection if such a direct connection is available. In a possible implementation the LTS-tunnel is established in step S3 only if the other network node accepts the establishment of the LTS-tunnel. Alternatively, if the identified network is identical with the querying network node the querying network node establishes in step S3 a LTS-tunnel within the querying network node.

The method according to the first aspect of the present invention allows for providing local traffic shortcuts LTS in a packet-oriented mobile communication network. In particular, the mechanism embodied by the methods for providing a local traffic shortcut according to the first aspect of the present invention is based on informing a network node such as a 3GPPeNB or serving gateway (SGW) about the correlation information for a specific data traffic. Further, the mechanism is based on detecting a possibility for a local traffic shortcut LTS in the network node serving the specific data traffic. Finally, an LTS-data path or LTS-tunnel is established within the network node or a corresponding network node of the network. If in the mobile communication network a bearer concept is used the correlation information can be provided to the network nodes, e.g. by the edge gateways as part of the signalling in context of the bearer or tunnel set up or modification. In a possible implementation it is especially advantageous if the bearer tunnel is exclusively used by that service for which the local traffic shortcut (LTS) is allowed. In this case the network nodes can operate on a bearer or tunnel granularity and are not required to differentiate amongst the IP data flows within the bearer or tunnel data traffic. In a possible implementation of the first aspect of the present invention if the optional LTS permission information is not provided then, this is interpreted as information that LTS is allowed. In a possible implementation of the first aspect of the present invention the decision whether a local traffic shortcut LTS for a specific service is permitted or not can be taken by an intermediary network node such as an edge gateway based on an operator policy. This operator policy can be locally configured or dynamically received through a PCC functionality as provided in a 3GPP network. In a possible implementation the edge gateway can also be configured to enforce the exclusive bearer usage for LTS allowed services.

In a possible implementation of the first aspect of the present invention permission for a local traffic shortcut LTS may be refused on a per subscriber basis, e.g. due to interception requirements. The denial of a LTS permission can, according to a government regulation, not allow to draw the conclusion that a subscriber is intercepted. This can also be handled by adding a randomization function that disallows a local traffic shortcut LTS on a random basis also in cases where it is normally permitted.

In a possible implementation in addition to the delivery of the information to the network node (which is in general not aware of any service) that a local traffic shortcut LTS is permitted for that specific bearer or tunnel it is also required to provide correlation information data to enable the detection that LTS is possible. This correlation information can enable a network node to identify the two bearers or tunnels which are subject to a local traffic shortcut LTS. For example, any identifier which is specific for an instance of a service such as an IMS session identifier or an IP-5-tuple description of the IP data flows can be used.

In a possible implementation of the first aspect of the present invention if the network node receives the correlation information and optional also a LTS permission information within the bearer or tunneling signalling, it can store this data together with its own node identity in the LTS-database. In a possible implementation the LTS-database can be node internal. In this implementation a node identity may be omitted. In an alternative implementation the LTS-database is node external which enables a local traffic shortcut (LTS) between different network nodes. Furthermore, it is possible that internal and external LTS-databases may exist in parallel. In a possible implementation an external LTS-database can serve a complete mobile operator network to ensure that the same LTS-database is selected by all network nodes. In an alternative implementation the mobile communication network can be divided into multiple LTS areas served by different external LTS-databases. In a possible implementation network nodes at the border of an LTS area can inform an external LTS-database of the neighbour LTS area in addition to the external LTS-database responsible for the recent LTS area. This can result in overlapping LTS areas.

Together with the storage of the above stated data or information a network node can query the LTS-database for entries with the same correlation information. If no such entry can be found the normal bearer or tunnel signalling continues. If the querying network node finds a corresponding entry the querying instance gets the information that allows the identification of the other serving network node. In a possible implementation there can also be a two step search wherein an internal LTS-database is queried and subsequently the node external LTS-database is queried in case that the internal LTS-database query was inconclusive. The network node can then check whether it is possible to establish a direct connection with the other network node or if a node internal connection is possible. In a possible implementation of the first aspect of the present invention this check can include both, a verification of a node internal configuration as well as the actual establishing of an LTS bearer or LTS-tunnel with the other network node in step S3 to allocate the required transmission resources.

Alternatively, a check whether it is possible to establish a direct LTS connection with the other network node or if a network node internal connection is possible can also be performed by a node external control entity. In a possible implementation such as a node external control entity can be collocated with an external LTS-database. In this implementation a network node gets an explicit instruction to establish an LTS bearer or LTS-tunnel to another network node when storing its information in the external LTS-database. The external control unit can be configured with topology information of the packet-oriented mobile communication network. Further, the external control entity can be configured with information about network node pairs for which an LTS bearer or LTS-tunnel can be established.

In a further possible implementation of the first aspect of the present invention in addition to the correlation information and the node identity the user IP address and a bearer identifier can be stored in the database as well. This implementation allows to simplify the behaviour of the network node which receives the LTS bearer establishment request by indicating the affected bearer or tunnel. Otherwise, the network node would have to identify the bearer based on the correlation information that is received with the LTS bearer establishment request.

In a possible implementation if the other network node accepts an establishment of the LTS bearer and corresponding transmission resources are available, the LTS bearer or LTS-tunnel can be activated and both network nodes are directly forwarding the corresponding data traffic received from their respective end device or terminal to the other network node through the LTS bearer instead of relaying it to an edge gateway. In a possible implementation the edge gateway is informed about the LTS usage in the bearer signalling and previously allocated resources can be reduced accordingly. The originally setup connection, i.e. packet tunnel, to the edge gateway can remain unchanged except for the reduction of allocated payload transfer resources. This ensures that in case of a release of an LTS the original setup connection can quickly be re-used. If the different terminals or user equipments are served by different edge gateways or intermediary network nodes both edge gateways can be informed in a possible implementation.

In a further possible implementation of the first aspect of the present invention the LTS bearer can be used for single direction only. If, for example, a downlink data traffic of a user equipment UE or terminal needs to pass through an edge gateway (packet-oriented to be analyzed and potentially blocked), the LTS bearer may only be established for the uplink traffic of this user equipment UE. The network node is then sending the uplink traffic through the LTS bearer but receiving the downlink traffic from the edge gateway. A corresponding network node serving the corresponding user equipment UE is receiving the downlink data traffic from the LTS bearer and is forwarding the uplink data traffic to its edge gateway. In a possible implementation a direction restricted LTS bearer can be achieved by extending the information that a local traffic shortcut LTS is permitted for a bearer with direction information which indicates the network node to apply the LTS bearer for either the uplink data traffic, the downlink data traffic or for all data traffic.

In a possible implementation the LTS bearer is used as long as the corresponding (original) bearer exists in the network node. In case of a bearer termination, the LTS bearer can also be removed by means of a signalling to the other network node. In addition, the network node can also update the LTS-database. In case of a mobility event, i.e. if the corresponding bearer continues but the network node is changed, a source network node can inform the target network node about the existing LTS bearer and the corresponding network node when it gets informed about the current mobility event. In this case the target network node can now evaluate whether a local traffic shortcut LTS to the corresponding network can be continued and inform the source network node accordingly. The source network node can then either update the LTS bearer with the updated target node connection information or terminate the LTS bearer if a local traffic shortcut LTS is not possible between the target network node and the corresponding network node. In a possible implementation the target network node stores the correlation information in any case together with its own node identity in a LTS-database. In a further implementation the check whether a local traffic shortcut LTS is possible can also be done regardless of an actual node change in case that a local traffic shortcut LTS was already possible before but the resources required for the LTS bearer were not available.

In a possible implementation of the first aspect of the present invention if there is a further mobility event including a network node change, the target network node can store the correlation information together with its own identity in a LTS-database. If local traffic shortcut LTS is allowed for the bearer (service) and there is no LTS bearer in place, the target network node can also query the LTS-database for any entries with the same correlation information. If the target network node gets the information about another network node which is transferring the respective service, the target network node can check whether it is possible to establish a direct connection with the other network node and try to establish an LTS bearer with the other network node to allocate the required transmission resources. If the LTS bearer can be established, both network nodes inform in a possible implementation their related edge gateway and the network nodes finally use the LTS bearer for the data traffic forwarding (instead of forwarding it to the edge gateway).

Applying the mechanism according to the first aspect of the present invention allows for an optimization of the signal path which a specific user data traffic will take through the mobile communication network. It is possible that individual services can get the permission for a local traffic shortcut LTS while other user traffic will continue to be exchanged through the edge gateway. In a possible implementation if a local traffic shortcut LTS is possible, the network node which is closest to the leaf network nodes or radio access nodes can establish the LTS data path and the data traffic which got the permission for establishing a local traffic shortcut LTS will take the LTS-tunnel. Accordingly with the method for providing a local traffic shortcut LTS in a packet-oriented mobile communication network according to the first aspect of the present invention resources and processing capacity in the core network and especially in the edge gateway is no longer needed and can be used for other purposes. Furthermore, the saved transmission time for a service can either be used by the air interface or can be of benefit for the service experience of the user.

In case that there is more than one network node in the path which is able to perform a local traffic shortcut LTS the check whether LTS is possible can be done by all network nodes starting from the network node that is closest to the terminal or user equipment UE. Once, LTS is possible for a network node (and an LTS bearer or LTS-tunnel can be established) the other network nodes are either explicitly notified about the fact that a local traffic shortcut LTS is running or an external control entity is notified and can then avoid to give any further instructions for LTS to the other network nodes. It can be required that all network nodes store their identity in the LTS-database so that updated LTS bearers can be established as soon as possible, e.g. after performing a handover of a terminal.

With the method for providing a local traffic shortcut LTS in a packet-oriented mobile communication network according to the first aspect of the present invention a concept is provided to determine a LTS permission by one instance or a network node that has sufficient information and to detect the possibility to make actually use of a local traffic shortcut LTS and to perform LTS bearer establishment by another instance or multiple instances. Additionally, an LTS permission can be indicated to all network nodes involved in an initially setup traffic path. Furthermore, network nodes that are in a position to establish a local traffic shortcut LTS can do this autonomously, e.g. by an internal distributed control. As an alternative it is also possible that an external (central) controller supervises the LTS bearer establishment. This external central controller can in a possible implementation be collocated with a centralized LTS-database. In a possible implementation the LTS permission can be granted on a bearer basis and a fallback to the originally setup connection is quickly possible without unnecessary blocking of network resources of the respective network.

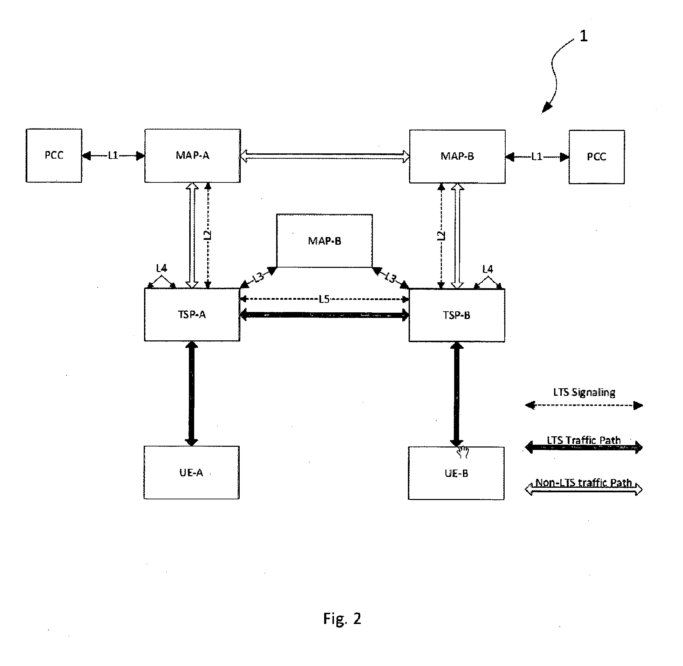

Fig. 2 shows a block diagram of the basic reference architecture of a mobile communication network in which a method for providing a local traffic shortcut LTS can be performed. The mobile communication network 1 as shown in the exemplary embodiment of fig. 2 is a packet-oriented mobile communication network according to a second aspect of the present invention. In a possible implementation the packet-oriented mobile communication network 1 as shown in fig. 1 can be a hierarchical network having different hierarchy levels. In a possible implementation a root network node can be connected in a hierarchical tree structure via intermediary network nodes to leaf network nodes. These leaf network nodes can be formed in a possible implementation by radio access nodes providing wireless links to mobile terminals. In a possible embodiment the root network node and the intermediary network nodes can be formed by gateway nodes. In a possible implementation an LTS-tunnel can be established in the network 1 between network nodes of the same hierarchy level. In a possible implementation the LTS-tunnel is established at the lowest possible hierarchy level of the mobile communication network, i.e. at the level closest to the user equipment nodes UE or terminals. As can be seen from fig. 2 the packet-oriented mobile communication network 1 comprises in the shown reference architecture two user equipment nodes UE-A and UE-B which can be formed by mobile terminals, for example mobile phones. The mobile terminals UE-A, UE-B are connected via wireless links to radio access network nodes which can be formed by base stations. These radio access network nodes can form traffic shortcut points TSP as shown in fig. 2. Each mobile user equipment node UE is connected via a wireless link to respective traffic shortcut points TSP-A, TSP-B as shown in fig. 2. The traffic shortcut points TSPs define a user plane node for performing a shortcut of the data traffic in the network. There can be several traffic shortcut points TSPs in the user plane for each of the user equipment devices UEs. In the user plane an O-TSP is an originally traffic shortcut point, i.e. the traffic shortcut point which routes an IP packet from the first user equipment device UE-A to the LTS-tunnel and bypasses the mobile anchor points MAPs. The originating traffic shortcut point O-TSP can for example be formed by an eNodeB, a serving gateway SGW, ePDG which serve the user equipment UE sending the IP data packet. The LTS-tunnel can be established between the originating traffic shortcut point O-TSP and a terminating traffic shortcut point T-TSP. The terminating traffic shortcut point T-TSP is the user plane node which receives the IP packet from the LTS-tunnel and forwards it to the second user equipment device UE-B. The terminating traffic shortcut point T-TSP can for example be formed by a eNodeB, a serving gateway node SGW or an ePDG which serves the user equipment UE receiving the IP packet.

As can be seen from fig. 2 each traffic shortcut points TSP can be connected to a mobile anchor point MAP respectively. The mobile anchor point MAP can for example be formed by a PDN-gateway which serves the corresponding user equipment device UE. The mobile anchor point MAP is included in a non-LTS path, but not included in the LTS path. It is possible to distinguish between an originating MAP (O-MAP) which serves the user equipment device UE sending the IP packet and a target MAP (T-MAP) which serves the user equipment device UE receiving the IP packet.

As can be seen in the block diagram of fig. 2 in the shown implementation of the network a local traffic shortcut control point LTSCP can gather information data for making an LTS decision. In a possible embodiment the local traffic shortcut control point LTSCP is involved to the LTS decision making together with the traffic shortcut points TSPs. In a possible implementation the local traffic shortcut control point LTSCP can be formed by a MME (mobility management entity) in a 3GPP network which serves the 3GPP access. The mobility management entity MME can be formed by a network node which performs a signalling and control function to manage the user equipment UE access network connections, the assignment of network resources and the management of the mobility space to support tracking, paging, roaming and handover's. The mobility managing entity MME can also control all functions related to a subscriber and session management. In a possible implementation the mobility management entity MME can manage a plurality of eNodeB elements. The local traffic shortcut control point LTSCP as shown in the implementation of fig. 2 can also be collocated in a traffic shortcut point TSP such as eNodeB. Furthermore, it is possible that the local traffic shortcut control point LTSCP is a separate entity with a separate network function.

All functional elements of the LTS basic reference architecture as shown in fig. 2 can be formed by logical functions. For example, O-MAP and T-MAP can be collocated in one packet network gateway PGW if is the same PGW as selected for both user equipment devices UE-A and UE-B. Furthermore, it is possible that O-TSP and T-TSP can be collocated in the same eNodeB or service gateway SGW or ePDG. As can be seen from fig. 2 the architecture of the network 1 can further comprise a PCC which provides a quality of service and charging policy for the traffic flows. In a possible implementation the PCC can also provide a LTS policy (i.e. whether a local traffic shortcut LTs is allowed or not). In a possible implementation the local traffic shortcut LTS provided by the method according to the present invention does not have an impact on an application function AF. Therefore, all legacy applications can be applied for the LTS.

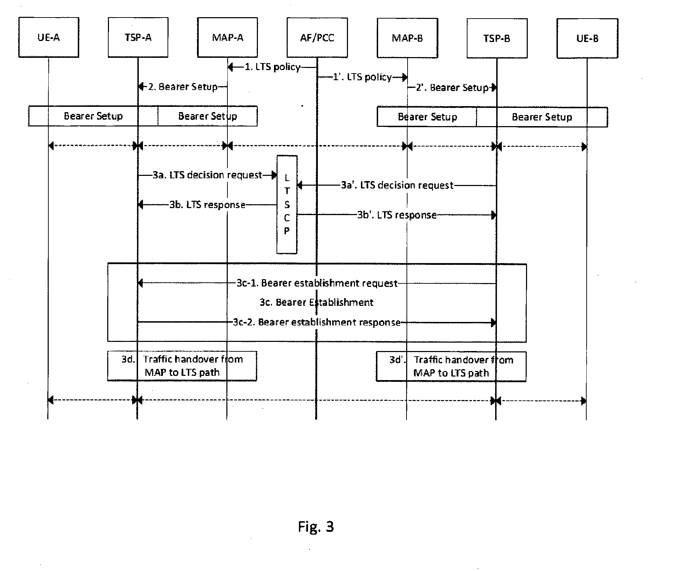

Fig. 3 shows a signal diagram on an exemplary procedure providing an IMS service between user equipment devices UE-A, UE-B and a reference architecture shown in fig. 2. In the shown example the first user equipment UE-A starts a voice/video conversation with the other user equipment UE-B after SIP negotiation and a list of traffic flows for the voice/video conversation can be created such as:
a first traffic flow 1, e.g. a voice traffic from UE-A to UE-B;
a second traffic flow 2, e.g. a video traffic from UE-A to UE-B;
a third traffic flow 3, e.g. a voice traffic from UE-B to UE-A;
a forth traffic flow 4, e.g. a video traffic from UE-B to UE-A.

All traffic flows can be identified in a possible implementation by a TFT (traffic flow template), e.g. a source IP, a source port, a destination IP, a destination port and a protocol number. A PCC can send the traffic flow template TFT with the charging and quality of service QoS rules to the traffic shortcut point TSP and the mobile anchor point MAP on both UE-A and UE-B sides.

For providing a local traffic shortcut LTS, besides a charging and quality of service QoS policy, the LTS policy can also be sent to the traffic shortcut point TSP and the mobile anchor point MAP on both sides. The LTS policy can indicate whether a local traffic shortcut LTS is allowed for the respective traffic flow. In a possible implementation the LTS policy is provided by the PCC based on an indication from the application function AF (e.g. for the IMS service only) or a charging policy (e.g. for offline charging only) or any other information. The LTS policy can also be provided by the traffic shortcut point TSP, a mobile anchor point MAP (e.g. PDN GW) based on pre-configuration information, such as LI policy.

Upon receiving the PCC policy from the PCC, the bearer or a tunnel binding can be performed on both sides of the user equipment devices UE-A, UE-B, and a bearer setup request can be sent to the access as shown in fig. 3. In EPS traffic with the same PCC rules (charging and quality of service) can be bound to the same bearer or tunnel. For providing a local traffic shortcut LTS a bearer can be bound to traffic flow templates TFTs with the same LTS policy indicating whether LTS is allowed or not. For example, if traffic flow 4, e.g. a video traffic from user equipment device UE-B to user equipment device UE-A is not LTS allowed due to a parent service of user equipment device UE-B then in both sides of both user equipments UE-A, UE-B only traffic flow 1, 2, 3 can be bound to the same bearer or tunnel. The traffic flow 4 is bound to another bearer which is applied for the non-LTS traffic.

In another example, at the same time, a user equipment device UE-A has another IMS conversation with further user equipment device UE-C, the traffic flows between user equipment device UE-A and user equipment device UE-C are also LTS allowed, however, as the data traffic is towards different remote mobile end users on the UE-A side the traffic between user equipment device UE-A and user equipment device UE-B and the data traffic between user equipment device UE-A and user equipment device UE-C can be bound to a different bearer.

After bearer binding has been performed, if there is no existing bearer or tunnel that can be used, further bearers can be established. Bearers or tunnels between a user equipment device UE and a traffic shortcut point TSP and the bearer between the traffic shortcut point TSP and the mobile anchor point MAP can be established on both sides of the user equipment devices UE-A, UE-B.

In LTS, it can be checked whether LTS is allowed in the bearer and whether the local traffic can be carried in the bearer. If so, a local bearer (LTS path) or a local LTS-tunnel can be setup between O-TSP and T-TSP. However, the bearers between TSP and MAP in both UE-A and UE-B side can be established in advance for the possible packet forwarding before LTS path establishment to avoid the transmit delay of the local traffic.

Following with reference to Fig. 3 additional steps in LTS for the bearer establishment are described.

In step 3a TSPs on both UE-A and UE-B sides send the LTS decision request to the LTSCP.

The LTS decision request can be sent to LTSCP by one TSP (e.g. SGW. Or eNodeB) with all the user plane node information, or sent to the LTSCP by all TSPs.

The LTS decision request can comprise the traffic flow identifier, e.g. TFT, TSP ID (s), e.g. eNodeB ID, SGW address, and other parameters of the bearer or tunnel, e.g. QoS, charging, parameter.

LTSCP is involved for the LTS decision. LTSCP can cover a local area, and interaction with all TSPs in the local area for LTS decision. The LTS decision can be performed as follows:

i) Checking of local traffic. If LTSCP received two LTS decision request with the same traffic flow identifier from UE-A and UE-B sides, the traffic is local traffic.

ii) Selection of TSPs. Based on the network topology information in the area, and the possible TSPs for the traffic flow in both UE-A and UE-B sides, the TSPs in both UE-A and UE-B sides can be selected.

For the traffic flow identifier, TFT is one option for the traffic flow identifier. A session ID from Application Function AF (e.g. IMS session ID) is another possible traffic flow identifier, which can identify a group of traffic flows. However, as a session ID can be created by a AF (e.g. P-CSCF in IMS), to have the unique identifier for the traffic flow, a unique AF ID (includes the operator information) is also required. A unique session ID can include a unique AF ID and a session ID in the AF. For checking of local traffic, the LTSCP can comprise a LTS database maintaining the traffic flow identifier from UE-A and UE-B sides. A local database in TSP which maintains the traffic flow identifier from UE-B and UE-B can also be used for the LTS in the same TSP.

For the selection of TSPs, there are two alternative implementations, i.e. a central controller or a distributed controller.

As a central controller the LTSCP maintains the network topology information, or interactions with the TSP to get the network topology information. If the traffic is local traffic, the LTSCP can decide whether the LTS should be performed and which TSPs shall be selected.

With a distributed controller the TSPs can perform the LTS decision in sequence. If the traffic is local traffic, a first TSP (e.g. eNodeB) performs the LTS decision based on the network topology information. If the first TSP is selected to perform the LTS, other TSPs are informed and no further LTS decision will be performed. If the first TSP is not selected for LTS, a second TSP (e.g. SGW) can be notified to perform the LTS decision.

In step 3b shown in Fig. 3 the LTSCP sends the LTS response to the TSP.

The LTS response can include the following three options:
1) Pending, LTSCP can not make the decision before receiving a request from another UE.
2) Non LTS, the LTS will not be performed for the traffic.
3) LTS indication, it may include the following additional information:
   Source TSP ID: the TSP which initiates the local bearer establishment request;
   Target TSP ID: the TSP which receives the local bearer establishment request;
   TFTs: UE-A and UE-B may have different LTS policy, so the TFTs sent to LTSCP may be different.
   Qos policy: the QoS request in UE-A and UE-B may be different as the policies may be received from different PCC operators with a different QoS policy.
   Charging policy: e.g. whether the traffic account will be reported to the MAP.

The message sequence can be considered during the LTS decision. As the traffic flow identifiers to be checked are sent from both UE-A and UE-B sides, they may not be received at the same time. Upon receiving the first LTS decision request (e.g. step 3a from UE-A), the LTSCP does not have enough information and can not check whether it is local traffic or not. This can be done only when receiving the second LTS decision request (e.g. step 3a' from UE-B), at which point the LTSCP knows that the traffic is local.

The TSP which sends the second LTS decision request can be selected as the source TSP, which initiates the local bearer establishment request. The TSP which sends the first LTS decision request can be selected as the target TSP, which receives the local bearer establishment request.

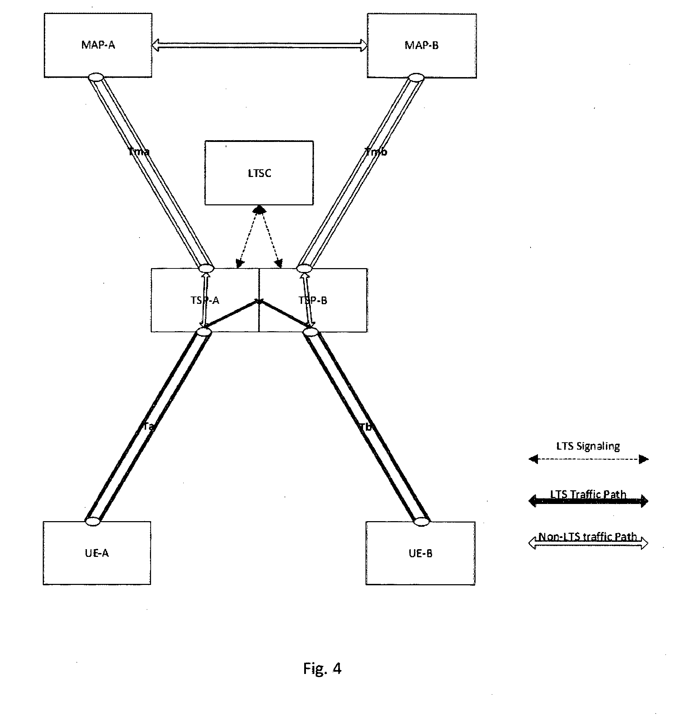

After LTS path establishment, the TSP can maintain the mapping between the UE tunnel and LTS path, e.g. for the LTS in the same TSP. The TSP-A(B) can maintain in following example table indicating a LTS in the same TSP as shown in fig. 4:

| UE Tunnel ID | MA Tunnel ID | LTS status | LTS Path |
|---|---|---|---|
| Ta | Tma | Active | Tb |
| Tb | Tmb | Active | Ta |

After LTS path establishment, TSP can maintain or store the mapping data.

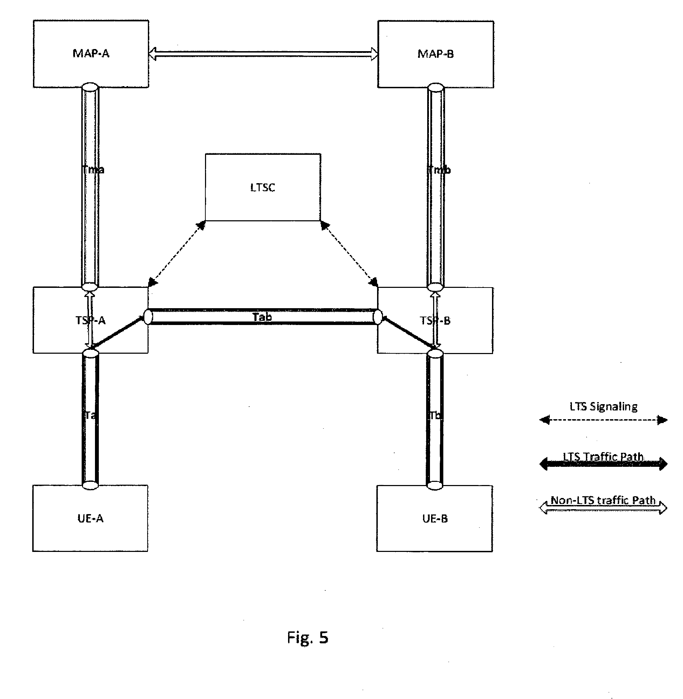

For a LTS with different TSPs as shown in fig. 5, TSP-A can maintain the following table:

| UE Tunnel ID | MA Tunnel ID | LTS status | LTS Path |
|---|---|---|---|
| Ta | Tma | Active | Tab |

Further, the other TSP-B can maintain the following table:

| UE Tunnel ID | MA Tunnel ID | LTS status | LTS Path |
|---|---|---|---|
| Tb | Tmb | Active | Tab |

Upon receiving an uplink IP packet from the UE tunnel, a TSP can easily check the LTS status of the UE tunnel. If it is active, it forwards the packet to the LTS path, otherwise, it forwards the packet to the MA tunnel. Upon receiving a downlink IP packet from the LTS path, a TSP can check the table and find the UE tunnel, and can forward it to the UE tunnel.

When the voice/video conversation finished, the list of traffic flows for the voice/video conversation can be released.

In LTS, the LTS path (local bearer) for the traffic flow can be released. The local bearer can be updated when any of the terminals does move.

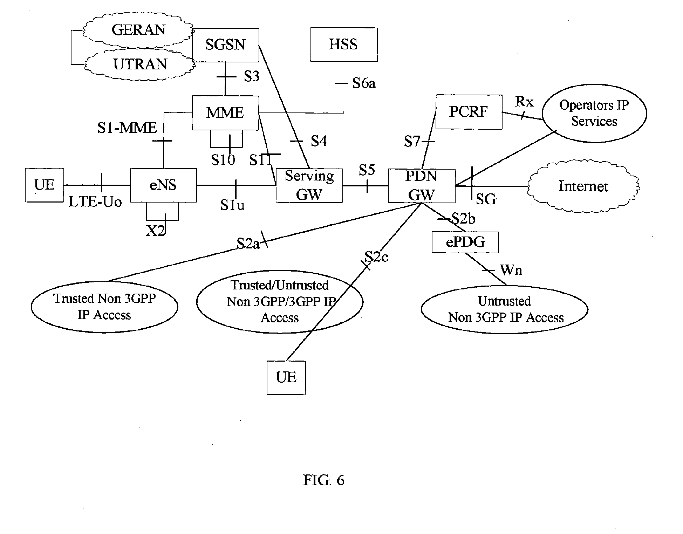

Fig. 6 shows the architecture of a 3GPP network as an example for a packet oriented mobile communication network in which a method for providing a local traffic shortcut LTS according to the present invention can be performed. As can be seen in fig. 6 a radio access network node such as eNodeB interfaces with the user equipment UE. A Node B hosts the physical, medium access control MAC, radio link control RLC and packet data control protocol. The serving gateway SGW roots and forwards the user data package and is also acting as a mobility anchor for the user plane during inter all handovers and as an anchor for mobility between LTE and other 3GPP networks. The mobility management entity MME forms a control node for the LTE access network. MME is responsible for UE tracking and paging procedures due to re-transmission. A packet data network gateway PDNGW provides connectivity to the user equipment UE to external packet data networks by forming a point of exit and entry of traffic for the user equipment UE. The packet data network gateway PDNGW can be connected to the internet as shown in fig. 6.

In the packet oriented mobile communication network according to the present invention the traffic shortcut point TSP for providing a local traffic shortcut LTS is e.g. formed by a eNodeB or a serving gateway node SGW. The local traffic shortcut control point LTSCP can be formed in a possible implementation by the MME in the 3GPP network as shown in fig. 6. Alternatively, the LTSCP can also be collocated in a TSP such as eNodeB.

## Claims

1. A method for providing a local traffic shortcut, LTS, in a packet-oriented mobile communication network (1) formed by a hierarchical network having different hierarchy levels, the hierarchical network comprising a tree structure having leaf network nodes connected via intermediary network nodes to at least one root network node, the method comprising the steps of:
(a) for a service instance of a service between a first leaf network node and a second leaf network node of the packet-oriented mobile communication network (1) setting up a service specific tunnel between the first leaf network node and the second leaf network node via said root network node;
(b) storing traffic instance identification data, TIID, of said service instance in an LTS-database and all network nodes along a signal path of the service specific tunnel storing their respective node IDs in said LTS-database;
(c) starting from a network node in the signal path that is closest to a user equipment (UE) or terminal, querying (S2), by said network nodes in the signal path, said LTS-database of said network for entries comprising the same traffic instance identification data, TIID, to identify at least one network node for performing a local traffic shortcut, LTS;
(d) establishing (S3) an LTS-tunnel with the identified network node, wherein the LTS-tunnel is established at the lowest possible hierarchy level of the network; and
(e) using (S4) the established LTS-tunnel with the identified network node for data traffic corresponding to said traffic instance identification data, TIID.

2. The method according to claim 1, wherein if the identified network node is formed by another network node, the querying network node checks whether a direct connection between the querying network node and the identified network node is available and establishes a LTS-tunnel with the other network node via the direct connection if a direct connection is available and if the other network node accepts the establishment of the LTS-tunnel.

3. The method according to claim 1, wherein if the identified network node is identical with the querying network node itself, the querying network node establishes a LTS-tunnel within the querying network node.

4. The method according to claims 1 to 2, wherein said LTS-tunnel is established between network nodes of the same hierarchy level.

5. The method according to claim 4, wherein said traffic instance identification data, TIID, of said service instance comprises a service ID of said service that is unique within the operator network.

6. The method according to claims 1 to 5, wherein the traffic instance identification data , TIID, and the node IDs are stored only if an LTS-permission indicating whether an establishment of a LTS-tunnel is admissible for the respective service instance is provided to the network node.

7. The method according to claims 4 to 6, wherein the LTS-tunnel is established if the direct connection is allowed by the configuration data of said network node.

8. The method according to any of the claims 1 to 7, wherein the LTS-database is formed by a central database collocated with a central control unit of said network (1).

9. The method according to claim 8, wherein said central control unit is configured with network topology information of said network and information about network node pairs for which a LTS-tunnel via a direct connection can be established.

10. The method according to any of the claims 3 to 8, wherein each network node comprises an LTS -database for checking whether establishment of a node-internal LTS-tunnel is possible.

11. A packet-oriented mobile communication network (1) comprising:
(a) a root network node connected in a hierarchical tree structure via intermediary network nodes to leaf network nodes; and
(b) a LTS-database for storing traffic instance identification data, TIID, for each service instance of a service together with node IDs of network nodes along a signal path of a service specific tunnel between a first leaf network node via said root network node to a second leaf network node;
wherein the network nodes of the packet-oriented mobile communication network are configured to carry out the steps according to claim 1.

12. The packet-oriented mobile communication network according to claim 11,
wherein said leaf network nodes are radio access nodes each providing wireless links to mobile terminals, wherein said root network node and said intermediary network nodes are formed by gateway nodes.

13. The packet-oriented mobile communication network according to claims 11 to 12,
wherein said packet-oriented mobile communication network (1) comprises a 3GPP network or a WIMAX network.

## Patentansprüche

1. Verfahren zum Bereitstellen einer lokalen Verkehrsabkürzung (local traffic shortcut, LTS) in einem paketorientierten Mobilkommunikationsnetzwerk (1), das durch ein hierarchisches Netzwerk gebildet wird, das unterschiedliche Hierarchieebenen aufweist, wobei das hierarchische Netzwerk eine Baumstruktur aufweist, die Blattnetzwerkknoten aufweist, die über Zwischennetzwerkknoten mit mindestens einem Wurzelnetzwerkknoten verbunden sind, wobei das Verfahren die folgenden Schritte aufweist:
(a) für eine Dienstinstanz eines Dienstes zwischen einem ersten Blattnetzwerkknoten und einem zweiten Blattnetzwerkknoten des paketorientierten Mobilkommunikationsnetzwerks (1) Aufbauen eines dienstspezifischen Tunnels zwischen dem ersten Blattnetzwerkknoten und dem zweiten Blattnetzwerkknoten über den Wurzelnetzwerkknoten;
(b) Speichern von Verkehrsinstanz-Identifikationsdaten (traffic instance identification data, TIID) der Dienstinstanz in eine LTS-Datenbank, und alle Netzwerkknoten längs eines Signalweg des dienstspezifischen Tunnels speichern ihre jeweiligen Knoten-IDs in der LTS-Datenbank;
(c) Beginnend mit einem Netzwerkknoten im Signalweg, der einer Benutzereinrichtung (user equipment, UE) oder einem Endgerät am nächsten ist, Abfragen (52) durch die Netzwerkknoten im Signalweg der LTS-Datenbank des Netzwerks nach Einträgen, die dieselben Verkehrsinstanz-Identifikationsdaten, TIID, aufweisen, um mindestens einen Netzwerkknoten zum Durchführen einer lokalen Verkehrsabkürzung, LTS, zu identifizieren;
(d) Herstellen (S3) eines LTS-Tunnels mit dem identifizierten Netzwerkknoten, wobei der LTS-Tunnel an der niedrigsten möglichen Hierarchieebene des Netzwerks aufgebaut wird; und
(e) Verwenden (S4) des aufgebauten LTS-Tunnels mit dem identifizierten Netzwerkknoten für einen Datenverkehr entsprechend den Verkehrsinstanz-Identifikationsdaten, TIID.

2. Verfahren nach Anspruch 1, wobei dann, wenn der identifizierte Netzwerkknoten durch einen anderen Netzwerkknoten gebildet wird, der abfragende Netzwerkknoten prüft, ob eine direkte Verbindung zwischen dem abfragenden Netzwerkknoten und dem identifizierten Netzwerkknoten verfügbar ist, und einen LTS-Tunnel mit dem anderen Netzwerkknoten über die direkte Verbindung herstellt, wenn eine direkte Verbindung verfügbar ist und wenn der andere Netzwerkknoten den Aufbau des LTS-Tunnels akzeptiert.

3. Verfahren nach Anspruch 1, wobei wenn der identifizierte Netzwerkknoten mit dem abfragenden Netzwerkknoten selbst identisch ist, der abfragende Netzwerkknoten einen LTS-Tunnel innerhalb des abfragenden Netzwerkknotens aufbaut.

4. Verfahren nach Anspruch 1 bis 2, wobei der LTS-Tunnel zwischen Netzwerkknoten derselben Hierarchieebene aufgebaut wird.

5. Verfahren nach Anspruch 4, wobei die Verkehrsinstanz-Identifikationsdaten, TIID, der Dienstinstanz eine Dienst-ID des Dienstes aufweisen, die innerhalb des Betreibernetzwerks eindeutig ist.

6. Verfahren nach Anspruch 1 bis 5, wobei die Verkehrsinstanz-Identifikationsdaten, TIID, und die Knoten-IDs nur gespeichert werden, wenn eine LTS-Erlaubnis, die anzeigt, ob ein Aufbau eines LTS-Tunnel für die jeweilige Dienstinstanz zulässig ist, an den Netzwerkknoten geliefert wird.

7. Verfahren nach Anspruch 4 bis 6, wobei der LTS-Tunnel aufgebaut wird, wenn die direkte Verbindung durch die Konfigurationsdaten des Netzwerkknotens zulässig ist.

8. Verfahren nach einem der Ansprüche 1 bis 7, wobei die LTS-Datenbank durch eine zentrale Datenbank gebildet wird, die sich mit einer zentralen Steuereinheit des Netzwerks (1) den Standort teilt.

9. Verfahren nach Anspruch 8, wobei die zentrale Steuereinheit mit Netzwerktopologieinformationen des Netzwerks und Informationen über Netzwerkknotenpaare konfiguriert ist, für die ein LTS-Tunnel über eine direkte Verbindung aufgebaut werden kann.

10. Verfahren nach einem der Ansprüche 3 bis 8, wobei jeder Netzwerkknoten eine LTS-Datenbank zur Prüfung aufweist, ob ein Aufbau eines knoteninternen LTS-Tunnels möglich ist.

11. Paketorientiertes Mobilkommunikationsnetzwerk (1), das Folgendes aufweist:
(a) einen Wurzelnetzwerkknoten, der in einer hierarchischen Baumstruktur über Zwischennetzwerkknoten mit Blattnetzwerkknoten verbunden ist; und
(b) eine LTS-Datenbank zum Speichern von Verkehrsinstanz-Identifikationsdaten, TIID, für jede Dienstinstanz eines Dienstes zusammen mit Knoten-IDs von Netzwerkknoten längs eines Signalwegs eines dienstspezifischen Tunnels zwischen einem ersten Blattnetzwerkknoten über den Wurzelnetzwerkknoten zu einem zweiten Blattnetzwerkknoten;
wobei die Netzwerkknoten des paketorientierten Mobilkommunikationsnetzwerks konfiguriert sind, die Schritte nach Anspruch 1 auszuführen.

12. Paketorientiertes Mobilkommunikationsnetzwerk nach Anspruch 11, wobei die Blattnetzwerkknoten Funkzugangsknoten sind, die jeweils drahtlose Verbindungen zu mobilen Endgeräten bereitstellen, wobei der Wurzelnetzwerkknoten und die Zwischennetzwerkknoten durch Gateway-Knoten gebildet werden.

13. Paketorientiertes Mobilkommunikationsnetzwerk nach Anspruch 11 bis 12, wobei das paketorientierte Mobilkommunikationsnetzwerk (1) ein 3GPP-Netzwerk oder ein WIMAX-Netzwerk umfasst.

## Revendications

1. Procédé de fourniture d'un raccourci de trafic local, LTS (Local Traffic Shortcut), dans un réseau de communication mobile orienté paquets (1) formé par un réseau hiérarchique présentant différents niveaux hiérarchiques, le réseau hiérarchique comprenant une structure arborescente ayant des noeuds de réseau feuilles connectés via des noeuds de réseau intermédiaires à au moins un noeud de réseau racine, le procédé comprenant les étapes suivantes :
(a) pour une instance de service d'un service entre un premier noeud de réseau feuille et un second noeud de réseau feuille du réseau de communication mobile orienté paquets (1), l'établissement d'un tunnel spécifique du service entre le premier noeud de réseau feuille et le second noeud de réseau feuille via ledit noeud de réseau racine ;
(b) le stockage des données d'identification d'instance de trafic, TIID (Traffic Instance Identification Data), de ladite instance de service dans une base de données LTS et tous les noeuds de réseau se trouvant le long d'un trajet de signal du tunnel spécifique du service en stockant leurs ID de noeuds respectifs dans ladite base de données LTS ;
(c) à partir d'un noeud de réseau se trouvant sur le trajet de signal qui est le plus proche d'un équipement utilisateur (UE, User Equipment) ou d'un terminal, l'interrogation (S2), par lesdits noeuds de réseau se trouvant sur le trajet de signal, de ladite base de données LTS dudit réseau pour trouver des entrées comprenant les mêmes données d'identification d'instance de trafic, TIID, afin d'identifier au moins un noeud de réseau pour effectuer un raccourci de trafic local, LTS ;
(d) l'établissement (S3) d'un tunnel LTS avec le noeud de réseau identifié, dans lequel le tunnel LTS est établi au niveau hiérarchique le plus bas possible du réseau ; et
(e) l'utilisation (S4) du tunnel LTS établi avec le noeud de réseau identifié pour un trafic de données correspondant auxdites données d'identification d'instance de trafic, TIID.

2. Procédé selon la revendication 1, dans lequel, si le noeud de réseau identifié est formé par un autre noeud de réseau, le noeud de réseau interrogateur vérifie si une connexion directe est disponible entre le noeud de réseau interrogateur et le noeud de réseau identifié et établit un tunnel LTS avec l'autre noeud de réseau via la connexion directe si une connexion directe est disponible et si l'autre noeud de réseau accepte l'établissement du tunnel LTS.

3. Procédé selon la revendication 1, dans lequel, si le noeud de réseau identifié est identique au noeud de réseau interrogateur lui-même, le noeud de réseau interrogateur établit un tunnel LTS dans le noeud de réseau interrogateur.

4. Procédé selon les revendications 1 à 2, dans lequel ledit tunnel LTS est établi entre des noeuds de réseau du même niveau hiérarchique.

5. Procédé selon la revendication 4, dans lequel lesdites données d'identification d'instance de trafic, TIID, de ladite instance de service comprennent un ID de service dudit service qui est unique au sein du réseau de l'opérateur.

6. Procédé selon les revendications 1 à 5, dans lequel les données d'identification d'instance de trafic, TIID, et les ID de noeuds ne sont stockés que si une permission LTS indiquant si un établissement d'un tunnel LTS est admissible pour l'instance de service respective est fournie au noeud de réseau.

7. Procédé selon les revendications 4 à 6, dans lequel le tunnel LTS est établi si la connexion directe est autorisée par les données de configuration dudit noeud de réseau.

8. Procédé selon l'une quelconque des revendications 1 à 7, dans lequel la base de données LTS est formée par une base de données centrale colocalisée avec une unité centrale de commande dudit réseau (1).

9. Procédé selon la revendication 8, dans lequel ladite unité centrale de commande est configurée avec des informations de topologie de réseau concernant ledit réseau et des informations concernant des paires de noeuds de réseau pour lesquelles un tunnel LTS peut être établi via une connexion directe.

10. Procédé selon l'une quelconque des revendications 3 à 8, dans lequel chaque noeud de réseau comprend une base de données LTS pour vérifier si l'établissement d'un tunnel LTS interne au noeud est possible.

11. Réseau de communication mobile orienté paquets (1) comprenant :
(a) un noeud de réseau racine connecté dans une structure arborescente hiérarchique via des noeuds de réseau intermédiaires à des noeuds de réseau feuilles ; et
(b) une base de données LTS pour stocker des données d'identification d'instance de trafic, TIID, pour chaque instance de service d'un service en association avec des ID de noeuds de noeuds de réseau le long d'un trajet de signal d'un tunnel spécifique d'un service entre un premier noeud de réseau feuille via ledit noeud de réseau racine et un second noeud de réseau feuille ;
dans lequel les noeuds de réseau du réseau de communication mobile orienté paquets sont configurés pour mettre en oeuvre les étapes selon la revendication 1.

12. Réseau de communication mobile orienté paquets selon la revendication 11, dans lequel lesdits noeuds de réseau feuilles sont des noeuds d'accès radio fournissant chacun des liaisons sans fil à des terminaux mobiles, dans lequel ledit noeud de réseau racine et lesdits noeuds de réseau intermédiaires sont formés par des noeuds passerelles.

13. Réseau de communication mobile orienté paquets selon les revendications 11 à 12, dans lequel ledit réseau de communication mobile orienté paquets (1) comprend un réseau 3GPP ou un réseau WIMAX.
